# EUROPEAN PATENT SPECIFICATION

(11) **EP 3 170 221 B1**
(45) Date of publication and mention of the grant of the patent: **27.03.2019**
(21) Application number: 15738675.6
(22) Date of filing: 17.07.2015
(51) Int. Cl.: H01M 10/052, H01M 10/0567, H01M 4/505, H01M 4/525

(54) **LIQUID FORMULATIONS, PROCESSES FOR THEIR MANUFACTURE, AND USE OF SUCH LIQUID FORMULATIONS**
FLÜSSIGE FORMULIERUNGEN, VERFAHREN ZU IHRER HERSTELLUNG, UND VERWENDUNG EINER SOLCHEN FLÜSSIGEN FORMULIERUNG
FORMULATIONS LIQUIDES, LEURS PROCÉDÉS DE FABRICATION ET LEUR UTILISATION

(30) Priority: 18.07.2014 EP 14177675
(43) Date of publication of application: 24.05.2017
(73) Proprietor: Gotion, Inc., Fremont, CA 94538 (US)
(72) Inventor: SCHMITZ, Rene, 70327 Stuttgart (DE); GEYER, Karolin, 67071 Ludwigshafen (DE); GOLLUB, Caroline, 68239 Mannheim (DE); HEILER, Heike, 68799 Reilingen (DE); SCHROEDER, Kristin, Philadelphia 19103 (US)
(74) Representative: Kuhnen & Wacker Patent- und Rechtsanwaltsbüro PartG mbB
(86) International application number: PCT/EP2015/066434
(87) International publication number: WO 2016/009052

(56) References cited:
- EP-A1- 2 490 291
- JP-A- 2014 192 145
- US-A1- 2002 001 756

## Description

The present invention is directed towards liquid formulations comprising
(A) at least one aprotic organic solvent,
(B) at least one lithium salt,
(C) at least 1.5 % by weight of one compound according to formula (I) 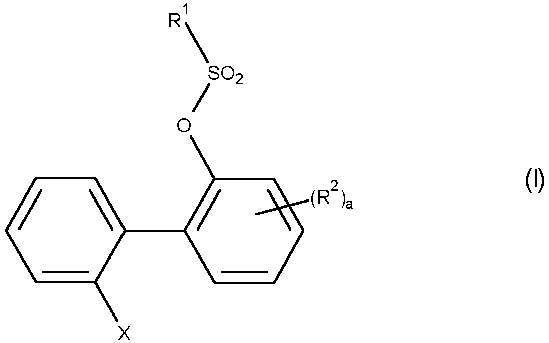 wherein:
   R¹ selected from C₁-C₆-alkyl, phenyl, and 2- and 4-pyridyl, wherein said C₁-C₆-alkyl, phenyl, and 2-pyridyl and 4-pyridyl may be non-substituted or substituted with one or more moieties selected from F, CN, C₁-C₄-alkyl and CF₃,
   R² identical or different and selected from C₁-C₄-alkyl, CN, and fluorine,
   a being a number in the range of from zero to four,
   X being selected from O-SO₂-R¹ and hydrogen,
   the percentage referring to the whole respective liquid formulation,
(D) essentially no 1,2,3,4-tetrahydronaphthalene,
(E) and, optionally, at least one additive other than (C).

Furthermore, the present invention is directed towards a process for making formulations according to the present invention. Furthermore, the present invention is directed towards a use, and a method of use, of the formulation according to the present invention.

Storing electrical energy is a subject of still growing interest. Efficient storage of electric energy would allow electric energy to be generated when it is advantageous and used when needed. Secondary electrochemical cells are well suited for this purpose due to their rechargeability. Secondary lithium batteries are of special interest for energy storage since they provide high energy density due to the small atomic weight and the large ionization energy of lithium and have become widely used as a power source for many portable electronics such as cellular phones, laptop computers, mini-cameras, etc.

If lithium ion batteries are charged in excess of their nominal voltage, e.g. by a defect in the charging station, the batteries tend to heat up which can in the worst case lead to a thermal runaway. As lithium ion batteries typically comprise flammable components such as the electrolyte compositions or the anode, the heat generated when overcharged can lead to ignition.

One possibility to deal with the safety hazard is the addition of overcharge protection additives. Known overcharge protection additives may terminate cell operation permanently. Such additives are, for example, aromatic compounds like biphenyl and cyclohexylphenyl, which polymerize at the cathode to release gas. The resulting polymer isolates the cathode from further overcharging while the gas activates a current interrupting device. EP 1 335 445 discloses a combination of aromatic compounds as electrolyte additives that polymerize upon oxidative initiation in the electrolyte when the battery is overcharged. However, the development of novel cathode active materials allowing the use of a lithium ion battery at higher voltages requires overcharge protection additives being effective at higher voltages, too.

EP 2 490 291 A1 discloses combinations of 1,2,3,4-tetrahydronaphthalene and certain biphenyl derivatives as overcharge protection additive in lithium ion batteries. However, the energy density of such electrochemical cells leaves room for improvement.

US 7,968,839 suggests to add 0.001 to 0.8 % by weight of certain preferably mono-substituted biphenyl derivatives in order to improve the battery performance.

It is the objective of the present invention to provide alternative overcharge protection additives and to preferably increase the safety of an electrochemical cell, in particular its overcharge protection efficiency at higher voltages. At the same time electrochemical cells comprising said overcharge protection additives should show high electrochemical performance over a wide temperature range, in particular cycle stability, energy density, power capability and a long shelf life.

Accordingly, the liquid formulations defined at the outset have been found, hereinafter also being referred to as formulations according to the invention, formulations according to the present invention or more briefly, inventive formulations.

Inventive formulations are liquid. That shall mean in the context of the present invention that they are liquid at ambient temperature. Preferably, inventive formulations are liquid at temperatures lower than ambient temperature, for example at -30°C or even -40°C. Such liquid formulations are particularly suitable for outdoor applications, for example for use in automotive batteries.

Inventive formulations contain
(A) at least one aprotic organic solvent, hereinafter in brief also referred to as solvent (A), preferably at least two aprotic organic solvents.

According to one embodiment the electrolyte composition may contain up to ten different solvents (A).

Solvent (A) is preferably selected from cyclic and acyclic organic carbonates, di-C₁-C₁₀-alkylethers, di-C₁-C₄-alkyl-C₂-C₆-alkylene ethers and polyethers, cyclic ethers, cyclic and acyclic acetals and ketals, orthocarboxylic acids esters, cyclic and acyclic esters of carboxylic acids, cyclic and acyclic sulfones, and cyclic and acyclic nitriles and dinitriles.

More preferably, solvent (A) is selected from cyclic and acyclic organic carbonates, di-C₁-C₁₀-alkylethers, di-C₁-C₄-alkyl-C₂-C₆-alkylene ethers and polyethers, cyclic and acyclic acetals and ketals, and cyclic and acyclic esters of carboxylic acids, even more preferred the solvent (A) is selected from cyclic and acyclic organic carbonates, and most preferred, inventive formulations contain at least two solvents (A) selected from cyclic and acyclic organic carbonates, in particular preferred inventive formulations contain at least one solvent (A) selected from cyclic organic carbonates and at least one solvent (A) selected from acyclic organic carbonates.

Solvent (A) may be partly halogenated, e.g. they may be partly fluorinated, partly chlorinated or partly brominated, and preferably solvent (A) may be partly fluorinated. "Partly halogenated" means, that one or more H of the respective molecule is replaced by a halogen atom, e.g. by F, Cl or Br. Preference is given to the substitution by F. The at least one solvent may be selected from partly halogenated and non-halogenated solvents (A), i.e. the electrolyte composition may contain a mixture of partly halogenated and non-halogenated solvents (A).

Examples of cyclic organic carbonates are ethylene carbonate (EC), propylene carbonate (PC) and butylene carbonate (BC), wherein one or more H of the alkylene chain may be substituted by F and/or an C₁ to C₄ alkyl group, e.g. 4-methyl ethylene carbonate, monofluoroethylene carbonate (FEC), and cis- and trans-difluoroethylene carbonate. Preferred cyclic organic carbonates are ethylene carbonate, monofluoroethylene carbonate and propylene carbonate, in particular ethylene carbonate.

Examples of acyclic organic carbonates are di-C₁-C₁₀-alkylcarbonates wherein each alkyl group may be selected independently from each other, preferred are di-C₁-C₄-alkylcarbonates.

Examples are e.g. diethyl carbonate (DEC), ethyl methyl carbonate (EMC), dimethyl carbonate (DMC), methylpropyl carbonate, di-n-propyl carbonate and diisopropylcarbonate. Preferred acyclic organic carbonates are diethyl carbonate (DEC), ethyl methyl carbonate (EMC), and dimethyl carbonate (DMC).

In one embodiment of the invention the electrolyte composition contains mixtures of acyclic organic carbonates and cyclic organic carbonates at a ratio by weight of from 1:10 to 10:1, preferred of from 3:1 to 1:1.

According to the invention each alkyl group of di-C₁-C₁₀-alkylethers may be selected independently from the other. Examples of di-C₁-C₁₀-alkylethers are dimethylether, ethylmethylether, diethylether, methylpropylether, diisopropylether, and di-n-butylether.

Examples of di-C₁-C₄-alkyl-C₂-C₆-alkylene ethers are 1,2-dimethoxyethane, 1,2-diethoxyethane, diglyme (diethylene glycol dimethyl ether), triglyme (triethyleneglycol dimethyl ether), tetraglyme (tetraethyleneglycol dimethyl ether), and diethylenglycoldiethylether.

Examples of suitable polyethers are polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably dimethyl- or diethyl- end-capped polyalkylene glycols. The molecular weight M_{w} of suitable polyalkylene glycols and especially of suitable polyethylene glycols may be at least 400 g/mol. The molecular weight M_{w} of suitable polyalkylene glycols and especially of suitable polyethylene glycols may be up to 5 000 000 g/mol, preferably up to 2 000 000 g/mol.

Examples of cyclic ethers are 1,4-dioxane, tetrahydrofuran, and their derivatives like 2-methyl tetrahydrofuran.

Examples of acyclic acetals are 1,1-dimethoxymethane and 1,1-diethoxymethane. Examples of cyclic acetals are 1,3-dioxane, 1,3-dioxolane, and their derivatives such as methyl dioxolane.

Examples of acyclic orthocarboxylic acid esters are tri-C₁-C₄ alkoxy methane, in particular trimethoxymethane and triethoxymethane. Examples of suitable cyclic orthocarboxylic acid esters are 1,4-dimethyl-3,5,8-trioxabicyclo[2.2.2]octane and 4-ethyl-1-methyl-3,5,8-trioxabicyclo[2.2.2]octane.

Examples of acyclic esters of carboxylic acids are ethyl and methyl formiate, ethyl and methyl acetate, ethyl and methyl proprionate, and ethyl and methyl butanoate, and esters of dicarboxylic acids like 1,3-dimethyl propanedioate. An example of a cyclic ester of carboxylic acids (lactones) is γ-butyrolactone.

Examples of cyclic and acyclic sulfones are ethyl methyl sulfone, dimethyl sulfone, and tetrahydrothiophene-S,S-dioxide (sulfolane).

Examples of cyclic and acyclic nitriles and dinitriles are adipodinitrile, acetonitrile, propionitrile, and butyronitrile.

In addition, inventive formulations comprise
(B) at least one lithium salt, hereinafter also being referred to as lithium salt (B).

Lithium salt (B) is preferably selected from the group consisting of
- Li[F₆₋ₓP(C_{y}F_{2y+1})ₓ], wherein x is an integer in the range from zero to 6 and y is an integer in the range from 1 to 20;
   Li[B(R³)_{4]}, Li[B(R³)₂(OA¹O)] and Li[B(O-A¹-O)₂] wherein each R³ is independently from each other selected from F, CI, Br, I, C₁-C₄ alkyl, C₂-C₄ alkenyl, C₂-C₄ alkynyl, OC₁-C₄ alkyl, OC₂-C₄ alkenyl, and OC₂-C₄ alkynyl wherein alkyl, alkenyl, and alkynyl may be substituted by one or more OR⁴, wherein R⁴ is selected from C₁-C₆ alkyl, C₂-C₆ alkenyl, and C₂-C₆ alkynyl, and
   (O-A¹-O) is a bivalent group derived from a 1,2-diol or 1,3-diol, a 1,2-dicarboxylic acid or 1,3-dicarboxlic acid or a 1,2- hydroxycarboxylic acid or 1,3-hydroxycarboxylic acid, wherein the (O-A¹-O) group forms a five- or six-membered cycle via both oxygen atoms with the B-atom;
- LiClO₄, LiAsF₆, LiCF₃SO₃, Li₂SiF₆, LiSbF₆, LiAlCl₄, Li(N(SO₂F)₂), lithium tetrafluoro (oxalato) phosphate, lithium oxalate, and
- salts of the general formula Li[Z(CₙF₂ₙ₊₁SO₂)ₘ], where m and n are defined as follows:
   m = 1 when Z is selected from oxygen and sulfur,
   m = 2 when Z is selected from nitrogen and phosphorus,
   m = 3 when Z is selected from carbon and silicon, and
   n is an integer in the range from 1 to 20, preferably up to 8.

Suited 1,2- and 1,3-diols from which the group (O-A¹-O) is derived may be aliphatic or aromatic and may be selected, e.g., from 1,2-dihydroxybenzene, propane-1,2-diol, butane-1,2-diol, propane-1,3-diol, butan-1,3-diol, cyclohexyl-trans-1,2-diol and naphthalene-2,3-diol which are optionally are substituted by one or more F and/or by at least one straight or branched non fluorinated, partly fluorinated or fully fluorinated C₁-C₄ alkyl group. An example for such 1,2- or 1,3-diole is 1,1,2,2-tetra(trifluoromethyl)-1,2-ethane diol.

"Fully fluorinated C₁-C₄ alkyl group" means that all H-atoms of the respective alkyl group are replaced by F.

Suitable 1,2- or 1,3-dicarboxlic acids from which the bivalent group (O-A¹-O) may be derived may be aliphatic or aromatic, for example oxalic acid, malonic acid (propane-1,3-dicarboxylic acid), phthalic acid or isophthalic acid, preferred is oxalic acid. The 1,2- or 1,3-dicarboxlic acid are optionally substituted by one or more F and/or by at least one straight or branched non fluorinated, partly fluorinated or fully fluorinated C₁-C₄ alkyl group.

Suitable 1,2- or 1,3-hydroxycarboxylic acids from which the bivalent group (O-A¹-O) may be derived may be aliphatic or aromatic, for example salicylic acid, tetrahydro salicylic acid, malic acid, and 2-hydroxy acetic acid, which are optionally substituted by one or more F and/or by at least one straight or branched non fluorinated, partly fluorinated or fully fluorinated C₁-C₄ alkyl group. An example for such 1,2- or 1,3-hydroxycarboxylic acids is 2,2-bis(trifluoromethyl)-2-hydroxy-acetic acid.

Examples of Li[B(R³)₄], Li[B(R³)₂(O-A¹-O)] and Li[B(O-A¹-O)₂] are LiBF₄, lithium difluoro oxalato borate and lithium dioxalato borate.

Preferably lithium salt (B) is selected from LiPF₆, LiBF₄, and LiPF₃(CF₂CF₃)₃, and more preferably, lithium salt (B) is selected from LiPF₆ and LiBF₄, and the most preferred lithium salt (B) is LiPF₆.

In one embodiment of the present invention, lithium salt (B) is present at a minimum concentration of at least 0.1 m/l, preferably the concentration of the at least one conducting salt is 0.5 to 2 mol/l based on the entire inventive formulation.

Furthermore, formulations according to the present invention contain at least 1.5 % by weight of one compound according to formula (I) 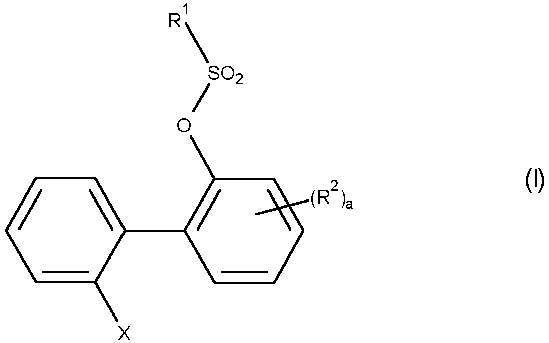 wherein:
- R¹: selected from C₁-C₆-alkyl, phenyl, and 2- and 4-pyridyl, wherein said C₁-C₆-alkyl, phenyl, and 2-pyridyl and 4-pyridyl may be substituted with one or more moieties selected from F, CN, C₁-C₄-alkyl, especially methyl or ethyl, and CF₃, or preferably non-substituted,
- R²: identical or different and selected from F, CN, and C₁-C₄-alkyl, preferred are methyl, ethyl, CN, and fluorine,
- a: being a number in the range of from zero to four, preferably zero or 1 and particularly preferably zero.
- X: is selected from O-SO₂-R¹ with the R¹ groups being different or equal, and preferably hydrogen,
the percentage referring to the whole respective formulation according to the present invention.

In one embodiment of the present invention R¹ is CH₃. In one embodiment of the present invention a is zero.

In one embodiment of the present invention compound (I) is compound (1 a).

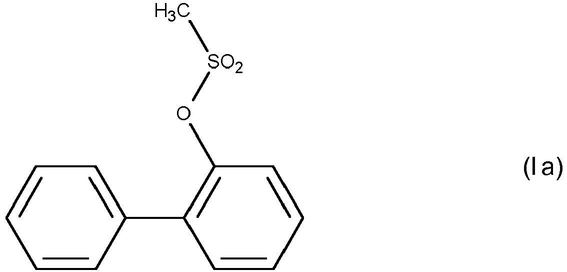

Furthermore, inventive formulations essentially contain no 1,2,3,4-tetrahydronaphthalene. In the context of the present invention, "essentially contain no 1,2,3,4-tetrahydronaphthalene" means that the respective formulations contain zero to 0.01 % by weight of 1,2,3,4-tetrahydronaphthalene, said percentage referring to the whole respective liquid formulation.

Inventive formulations can be used as electrolytes for lithium ion batteries and for their respective electrochemical cells, for all or for some.

In one embodiment of the present invention formulations according to the present invention may comprise
(E) at least one additive other than (C). Such additives may improve the properties of inventive formulations when used as an electrolyte.

One class of additives (E) are polymers, hereinafter also being referred to as polymers (E). Polymers may be selected from polyvinylidene fluoride, polyvinylidene-hexafluoropropylene copolymers, polyvinylidene-hexafluoropropylene-chlorotrifluoroethylene copolymers, Nafion, polyethylene oxide, polymethyl methacrylate, polyacrylonitrile, polypropylene, polystyrene, polybutadiene, polyethylene glycol, polyvinylpyrrolidone, polyaniline, polypyrrole and/or polythiophene. Polymers (E) may be added to a formulation according to the present invention in order to convert liquid formulations into quasi-solid or solid electrolytes and thus to improve solvent retention, especially during ageing.

One other class of additives (E) are carbonates with a C-C double bond, for example vinylene carbonate, methylene ethylene carbonate and vinyliden ethylene carbonate.

One other class of additives (E) are flame retardants, hereinafter also being referred to as flame retardants (E). Examples of flame retardants (E) are organic phosphorous compounds like cyclophosphazenes, phosphoramides, alkyl and/or aryl tri-substituted phosphates, alkyl and/or aryl di- or tri-substituted phosphites, alkyl and/or aryl di- substituted phosphonates, alkyl and/or aryl tri- substituted phosphines, and fluorinated derivatives thereof.

One other class of additives (E) are HF- and/or H₂O scavengers. Examples of HF and/or H₂O scavenger are optionally halogenated cyclic and acyclic silylamines.

Another class of additives (A) are so-called SEI-forming additives. An SEI forming additive according to the present invention is a compound which decomposes on an electrode to form a passivation layer on the electrode which prevents degradation of the electrolyte and/or the electrode. In this way, the lifetime of a battery is significantly extended. Preferably the SEI forming additive forms a passivation layer on the anode. An anode in the context of the present invention is understood as the negative electrode of a battery. Preferably, the anode has a reduction potential of 1 Volt or less against lithium such as a lithium intercalating graphite anode. In order to determine if a compound qualifies as anode film forming additive, an electrochemical cell can be prepared comprising a graphite electrode and a metal counter electrode, and an electrolyte containing a small amount of said compound, typically from 0.1 to 10 wt.-% of the electrolyte composition, preferably from 0.2 to 5 wt.-% of the electrolyte composition. Upon application of a voltage between anode and lithium metal, the differential capacity of the electrochemical cell is recorded between 0.5 V and 2 V. If a significant differential capacity is observed during the first cycle, for example -150 mAh/V at 1 V, but not or essentially not during any of the following cycles in said voltage range, the compound can be regarded as SEI forming additive.

According to the present invention the electrolyte composition preferably contains at least one SEI forming additive. SEI forming additives are known to the person skilled in the art. More preferred the electrolyte composition contains at least one SEI forming selected from vinylene carbonate and its derivatives such as vinylene carbonate and methylvinylene carbonate; fluorinated ethylene carbonate and its derivatives such as monofluoroethylene carbonate, cis- and trans-difluorocarbonate; oprganic sultones such as propylene sultone, propane sultone and their derivatives; ethylene sulfite and its derivatives; oxalate comprising compounds such as lithium oxalate, oxalato borates including dimethyl oxalate, lithium bis(oxalate) borate, lithium difluoro (oxalato) borate, and ammonium bis(oxalato) borate, and oxalato phosphates including lithium tetrafluoro (oxalato) phosphate; and ionic compounds containing a cation of formula (II) 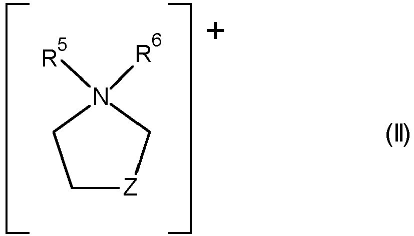 wherein
Z is CH₂ or NR¹³,
R⁵ is selected from C₁ to C₆ alkyl,
R⁶ is selected from -(CH₂)ᵤ-SO₃-(CH₂)ᵥ-R¹⁴,
   -SO₃- is -O-S(O)₂- or -S(O)₂-O-, preferably -SO₃- is -O-S(O)₂-,
   u is an integer from 1 to 8, preferably u is 2, 3 or 4, wherein one or more CH₂ groups of the - (CH₂)ᵤ- alkylene chain which are not directly bound to the N-atom and/or the SO₃ group may be replaced by O and wherein two adjacent CH₂ groups of the -(CH₂)ᵤ- alkylene chain may be replaced by a C-C double bond, preferably the -(CH₂)ᵤ- alkylene chain is not substituted and u is an integer from 1 to 8, preferably u is 2, 3 or 4,
v is an integer from 1 to 4, preferably v is 0,
R¹³ is selected from C₁ to C₆ alkyl,
R¹⁴ is selected from C₁-C₂₀ alkyl, C₂-C₂₀ alkenyl, C₂-C₂₀ alkynyl, C₆-C₁₂ aryl, and C₆-C₂₄ aralkyl, which may contain one or more F, and wherein one or more CH₂ groups of alkyl, alkenyl, alkynyl and aralkyl which are not directly bound to the SO₃ group may be replaced by O, preferably R¹⁴ is selected from C₁-C₆ alkyl, C₂-C₄ alkenyl, and C₂-C₄ alkynyl, which may contain one or more F, and wherein one or more CH₂ groups of alkyl, alkenyl, alkynyl and aralkyl which are not directly bound to the SO₃ group may be replaced by O, preferred examples of R¹⁴ include methyl, ethyl, trifluoromethyl, pentafluoroethyl, n-propyl, n-butyl, n-hexyl, ethenyl, ethynyl, allyl or prop-1-yn-yl,
   and an anion selected from bisoxalato borate, difluoro (oxalato) borate, [F_{z}B(CₙF_{2y+1})_{4-z}]⁻, [F_{y}P(CₙF₂ₙ₊₁)_{6-y}]⁻, (C_{y}F₂ₙ₊₁)₂P(O)O]⁻, [C_{y}F₂ₙ₊₁P(O)O₂]²⁻, [O-C(O)-CₙF₂ₙ₊₁]⁻, [O-S(O)₂-CₙF₂ₙ₊₁]⁻, [N(C(O)-CₙF₂ₙ₊₁)₂]⁻, [N(S(O)₂-CₙF₂ₙ₊₁)₂]⁻, [N(C(O)-CₙF₂ₙ₊₁)(S(O)₂-CₙF₂ₙ₊₁)]⁻, [N(C(O)-CₙF₂ₙ₊₁)(C(O)F)]⁻, [N(S(O)₂-CₙF₂ₙ₊₁)(S(O)₂F)]⁻, [N(S(O)₂F)₂]⁻, [C(C(O)-CₙF₂ₙ₊₁)₃]⁻, [C(S(O)₂-CₙF₂ₙ₊₁)₃]⁻, wherein n is an integer from 1 to 20, preferably up to 8, z is an integer from 1 to 4, and y is an integer from 1 to 6,
Preferred anions are bisoxalato borate, difluoro (oxalato) borate, [F₃B(CF₃)]⁻, [F₃B(C₂F₅)]⁻, [PF₆]⁻, [F₃P(C₂F₅)₃]⁻, [F₃P(C₃F₇)₃]⁻, [F₃P(C₄F₉)₃]⁻, [F₄P(C₂F₅)₂]⁻, [F₄P(C₃F₇)₂]⁻, [F₄P(C₄F₉)₂]⁻, [F₅P(C₂F₅)]⁻, [F₅P(C₃F₇)]⁻ or [F₅P(C₄F₉)]⁻, [(C₂F₅)₂P(O)O]⁻, [(C₃F₇)₂P(O)O]⁻ or [(C₄F₉)₂P(O)O]⁻. [C₂F₅P(O)O₂]²⁻, [C₃F₇P(O)O₂]²⁻, [C₄F₉P(O)O₂]²⁻, [O-C(O)CF₃]⁻, [O-C(O)C₂F₅]⁻, [O-C(O)C₄F₉]⁻, [O-S(O)₂CF₃]⁻, [O-S(O)₂C₂F₅]⁻, [N(C(O)C₂F₅)₂]⁻, [N(C(O)(CF₃)₂]⁻, [N(S(O)₂CF₃)₂]⁻, [N(S(O)₂C₂F₅)₂]⁻, [N(S(O)₂C₃F₇)₂]⁻, [N(S(O)₂CF₃) (S(O)₂C₂F₅)]⁻, [N(S(O)₂C₄F₉)₂]⁻, [N(C(O)CF₃)(S(O)₂CF₃)]⁻, [N(C(O)C₂F₅)(S(O)₂CF₃)]⁻ or [N(C(O)CF₃)(S(O)₂-C₄F₉)]⁻, [N(C(O)CF₃)(C(O)F)]⁻, [N(C(O)C₂F₅)(C(O)F)]⁻, [N(C(O)C₃F₇)(C(O)F)]⁻, [N(S(O)₂CF₃)(S(O)₂F)]⁻, [N(S(O)₂C₂F₅)(S(O)₂F)]⁻, [N(S(O)₂C₄F₉)(S(O)₂F)]⁻, [C(C(O)CF₃)₃]⁻, [C(C(O)C₂F₅)₃]⁻ or [C(C(O)C₃F₇)₃]⁻, [C(S(O)₂CF₃)₃]⁻, [C(S(O)₂C₂F₅)₃]⁻, and [C(S(O)₂C₄F₉)₃]⁻.

More preferred the anion is selected from bisoxalato borate, difluoro (oxalato) borate, CF₃SO₃⁻, and [PF₃(C₂F₅)₃]⁻.

The term "C₂-C₂₀ alkenyl" as used herein refers to an unsaturated straight or branched hydrocarbon group with 2 to 20 carbon atoms having one free valence. Unsaturated means that the alkenyl group contains at least one C-C double bond. C₂-C₆ alkenyl includes for example ethenyl, 1-propenyl, 2-propenyl, 1-n-butenyl, 2-n-butenyl, iso-butenyl, 1-pentenyl, 1-hexenyl, 1-heptenyl, 1-octenyl, 1-nonenyl, 1-decenyl and the like. Preferred are C₂-C₁₀ alkenyl groups, more preferred are C₂-C₆ alkenyl groups, even more preferred are C₂-C₄ alkenyl groups and in particular ethenyl and 1-propen-3-yl (allyl).

The term "C₂-C₂₀ alkynyl" as used herein refers to an unsaturated straight or branched hydrocarbon group with 2 to 20 carbon atoms having one free valence, wherein the hydrocarbon group contains at least one C-C triple bond. C₂-C₆ alkynyl includes for example ethynyl, 1-propynyl, 2-propynyl, 1-n-butinyl, 2-n-butynyl, iso-butinyl, 1-pentynyl, 1-hexynyl, - heptynyl, 1-octynyl, 1-nonynyl, 1-decynyl and the like and the like. Preferred are C₂-C₁₀ alkynyl, more preferred are C₂-C₆ alkynyl, even more preferred are C₂-C₄ alkynyl, in particular preferred are ethynyl and 1-propyn-3-yl (propargyl).

The term "C₆-C₁₂ aryl" as used herein denotes an aromatic 6- to 12-membered hydrocarbon cycle or condensed cycles having one free valence. Examples of C₆-C₁₂ aryl are phenyl and naphtyl. Preferred is phenyl.

The term "C₇-C₂₄ aralkyl" as used herein denotes an aromatic 6- to 12-membered aromatic hydrocarbon cycle or condensed aromatic cycles substituted by one or more C₁-C₆ alkyl. The C₇-C₂₄ aralkyl group contains in total 7 to 24 C-atoms and has one free valence. The free valence may be located at the aromatic cycle or at a C₁-C₆ alkyl group, i.e. C₇-C₂₄ aralkyl group may be bound via the aromatic part or via the alkyl part of the aralkyl group. Examples of C₇-C₂₄ aralkyl are methylphenyl, benzyl, 1,2-dimethylphenyl, 1,3-dimethylphenyl, 1,4-dimethylphenyl, ethylphenyl, 2-propylphenyl, and the like.

Compounds of formula (II) and their preparation are described in detail in WO 2013/026854 A1. Examples of compounds of formula (II) which are preferred according to the present invention are disclosed on page 12, line 21 to page 15, line 13 of WO 2013/026854 A1.

Preferred SEI-forming additives are oxalato borates, fluorinated ethylene carbonate and its derivatives, vinylene carbonate and its derivatives, and compounds of formula (II). More preferred are lithium bis(oxalato) borate (LiBOB), vinylene carbonate, monofluoro ethylene carbonate, and compounds of formula (II), in particular monofluoro ethylene carbonate, and compounds of formula (II).

A compound added as additive (E) may have more than one effect in the electrolyte composition and the device comprising the electrolyte composition. E.g. lithium oxalato borate may be added as additive enhancing the SEI formation but may also be added as conducting salt.

In one embodiment of the present invention formulations additive (E) is selected from organic phosphates, organic phosphonates, organic sultones, and LiBOB.

In one embodiment of the present invention, inventive formulations contain:
in total 0.1 to 25 % by weight of lithium salt (B), preferably 10 to 20 % by weight,
   in total 1.5 to 10 % of compound according to formula (I), preferably 2 to 5 % by weight, even more preferably 3 to 5% by weight,
   zero to 0.01 % by weight of 1,2,3,4-tetrahydronaphthalene (D), and
   zero to in total 30% of additive(s) (E), preferably 1 to 10 % by weight,
percentages referring to the whole respective liquid formulation.

In one embodiment of the present invention, the water content of inventive formulations is preferably below 100 ppm, based on the weight of the respective inventive formulation, more preferred below 50 ppm, most preferred below 30 ppm. The water content may be determined by titration according to Karl Fischer, e.g. described in detail in DIN 51777 or ISO760: 1978. The minimum water content of inventive formulations may be selected from 3 ppm, preferably 5 ppm.

In one embodiment of the present invention, the HF-content of inventive formulations is preferably below 100 ppm, based on the weight of the respective inventive formulation, more preferred below 50 ppm, most preferred below 30 ppm. The minimum HF content of inventive formulations may be selected from 5 ppm, preferably 10 ppm. The HF content may be determined by titration.

Compounds of the formula (I), as described above or as described as being preferred, may be used as overcharge protection additive in an electrolyte composition for electrochemical cells. Therefore, a further aspect of the present invention is the use of compounds of formula (I) as described above as overcharge protection additives in electrolyte compositions.

Another aspect of the present invention is the use of inventive formulations in or for the manufacture of electrochemical cells. Such electrochemical cells may be used as or for the manufacture of lithium ion batteries. Another aspect of the present invention is a method of use of inventive formulations.

In particular preferred embodiments such electrochemical cell is part of a lithium ion battery, i.e. a secondary lithium ion electrochemical cell comprising a cathode (a) comprising a cathode active material that can reversibly occlude and release lithium ions and an anode (b) comprising an anode active material that can reversibly occlude and release lithium ions. The terms "secondary lithium ion electrochemical cell" and "(secondary) lithium ion battery" are used interchangeably within the present invention.

Another aspect of the present invention is thus an electrochemical cell comprising
(a) one cathode, hereinafter also being referred to as cathode (a),
(b) one anode, hereinafter also being referred to as anode (b),
(c) a separator, hereinafter also being referred to as separator (c), and
(d) an electrolyte selected from or comprising a formulation according to the present invention.

Preferably, cathode active materials are selected from a material capable of occluding and releasing lithium ions selected from lithiated transition metal phosphates and from lithium ion intercalating metal oxides.

Examples of lithiated transition metal phosphates are LiMnPO₄, LiFePO₄ and LiCOPO₄, examples of lithium ion intercalating metal oxides are LiCoO₂, LiNiO₂, mixed transition metal oxides with a layered structure, generally having the general formula Li_{(1+z})[NiₐCo_{b}Mn_{c}]_{(1-z)}O₂₊ₑ wherein z is 0 to 0.3; a, b and c may be same or different and are independently 0 to 0.8 wherein a + b + c = 1; and -0.1 ≤ e ≤ 0.1, and manganese-containing spinels like LiMn₂O₄ and spinels of general formula Li₁₊ₜM₂₋ₜO_{4-d} wherein d is 0 to 0.4, t is 0 to 0.4 and M is Mn and at least one further metal selected from the group consisting of Co and Ni, and lithium nickel cobalt aluminum oxides, the latter being materials of general formula Li_{(1+g)}[NiₕCoᵢAlⱼ]_{(1-g)}O₂₊ₖ. Typical values for g, h, i, j and k are: g = 0 to 0.1, h = 0.8 to 0.85, i = 0.15 to 0.20, j = 0.02 to 0.03 and k = 0.

In a preferred embodiment of the present invention cathode (a) contains at least one cathode active material selected from LiCoO₂, lithium nickel cobalt aluminum oxide, and layered lithiated nickel-cobalt-manganese oxide.

Cathode (a) may further comprise electrically conductive materials like electrically conductive carbon. Cathode (a) may further comprise components like binders. For example, cathode (a) may comprise carbon in a conductive polymorph, for example selected from graphite, carbon black, carbon nanotubes, graphene or mixtures of at least two of the aforementioned substances.

Cathode (a) may comprise one or more binders, for example one or more organic polymers like polyethylene, polyacrylonitrile, polybutadiene, polypropylene, polystyrene, polyacrylates, polyvinyl alcohol, polyisoprene and copolymers of at least two comonomers selected from ethylene, propylene, styrene, (meth)acrylonitrile and 1,3-butadiene, especially styrenebutadiene copolymers, and halogenated (co)polymers like polyvinlyidene chloride, polyvinly chloride, polyvinyl fluoride, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile.

Anode (b) comprises an anode active material that can reversibly occlude and release lithium ions or is capable to form an alloy with lithium. In particular carbonaceous material that can reversibly occlude and release lithium ions can be used as anode active material. Carbonaceous materials suited are crystalline carbon such as a graphite material, more particularly, natural graphite, graphitized cokes, graphitized MCMB, and graphitized MPCF; amorphous carbon such as coke, mesocarbon microbeads (MCMB) fired below 1500°C, and mesophase pitch-based carbon fiber (MPCF); hard carbon and carbonic anode active material (thermally decomposed carbon, coke, graphite) such as a carbon composite, combusted organic polymer, and carbon fiber.

Further examples of anode active materials are lithium metal and materials containing an element capable of forming an alloy with lithium. Non-limiting examples of materials containing an element capable of forming an alloy with lithium include a metal, a semimetal, or an alloy thereof. It should be understood that the term "alloy" as used herein refers to both alloys of two or more metals as well as alloys of one or more metals together with one or more semimetals. If an alloy has metallic properties as a whole, the alloy may contain a nonmetal element. In the texture of the alloy, a solid solution, a eutectic (eutectic mixture), an intermetallic compound or two or more thereof coexist. Examples of such metal or semimetal elements include, without being limited to, titanium (Ti), tin (Sn), lead (Pb), aluminum, indium (In), zinc (Zn), antimony (Sb), bismuth (Bi), gallium (Ga), germanium (Ge), arsenic (As), silver (Ag), hafnium (Hf), zirconium (Zr) yttrium (Y), and silicon (Si). Metal and semimetal elements of Group 4 or 14 in the long-form periodic table of the elements are preferable, and especially preferable are titanium, silicon and tin, in particular silicon. Examples of tin alloys include ones having, as a second constituent element other than tin, one or more elements selected from the group consisting of silicon, magnesium (Mg), nickel, copper, iron, cobalt, manganese, zinc, indium, silver, titanium (Ti), germanium, bismuth, antimony and chromium (Cr). Examples of silicon alloys include ones having, as a second constituent element other than silicon, one or more elements selected from the group consisting of tin, magnesium, nickel, copper, iron, cobalt, manganese, zinc, indium, silver, titanium, germanium, bismuth, antimony and chromium.

A further possible anode active material is silicon that is able to intercalate lithium ions. The silicon may be used in different forms, e.g. in the form of nanowires, nanotubes, nanoparticles, films, nanoporous silicon or silicon nanotubes. The silicon may be deposited on a current collector (c). Current collector (c) may be selected from coated metal wires, a coated metal grid, a coated metal web, a coated metal sheet, a coated metal foil or a coated metal plate. Preferably, current collector (c) is a coated metal foil, e.g. a coated copper foil. Thin films of silicon may be deposited on metal foils by any technique known to the person skilled in the art, e.g. by sputtering techniques. One method of preparing thin silicon film electrodes are described in R. Elazari et al.; Electrochem. Comm. 2012, 14, 21-24. It is also possible to use a silicon/carbon composite as anode active material.

Other possible anode active materials are lithium ion intercalating oxides of Ti.

Preferably the anode active material is selected from carbonaceous material that can reversibly occlude and release lithium ions, particularly preferred the carbonaceous material that can reversibly occlude and release lithium ions is selected from crystalline carbon, hard carbon and amorphous carbon, particularly preferred is graphite. In another preferred embodiment the anode active material is selected from silicon. Silicon can reversibly occlude and release lithium ions. Preferably, anode (b) comprises a thin film of silicon or a silicon/carbon composite. In a further preferred embodiment the anode active material is selected from lithium ion intercalating oxides of Ti.

Anode (b) and cathode (a) may be made by preparing an electrode slurry composition by dispersing the electrode active material, a binder, optionally a conductive material and a thickener, if desired, in a solvent and coating the slurry composition onto a current collector. The current collector may be a metal wire, a metal grid, a metal web, a metal sheet, a metal foil or a metal plate. Preferred the current collector is a metal foil, e.g. a copper foil or aluminum foil.

The inventive lithium batteries may contain further constituents customary per se, for example separators, housings, cable connections etc. The housing may be of any shape, for example cuboidal or in the shape of a cylinder, the shape of a prism or the housing used is a metal-plastic composite film processed as a pouch. Suited separators are for example glass fiber separators and polymer-based separators like polyolefin separators.

Several inventive electrochemical cells may be combined with one another, for example in series connection or in parallel connection. Series connection is preferred. The present invention further provides for the use of inventive lithium ion batteries as described above in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven staplers. But the inventive lithium ion batteries can also be used for stationary energy stores.

The present invention is further illustrated by the following examples that do not, however, restrict the invention.

### I. Synthesis

Compound of formula (I a) was synthesized by reacting 2-phenylpenol with CH₃SO₂-Cl in the presence of triethylamine as a base.

### II. Manufacture of an electrolyte

The following components were used:
(A.1): ethylene carbonate
(A.2): ethyl methyl carbonate
(B.1): LiPF₆
(C.1): compound of general formula (I a) 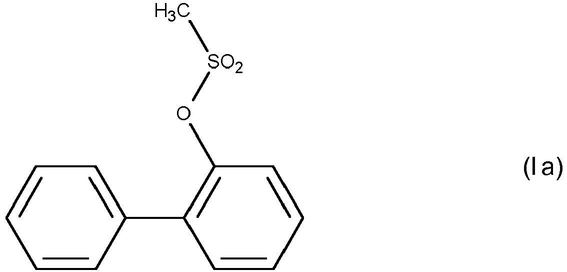
(D): 1,2,3,4-tetrahydronaphthalene

Further additives:
(E.1): vinylene carbonate (VC)
(E.2): biphenyl (BPN

In a glove box under argon, 1 M solution of (B.1) in (A.1)/(A.2) 3:7 by weight was prepared. To this solution (I a), (D) and (E) - if applicable - were added in accordance with Table 1.

The components of inventive formulations and comparative formulations are summarized in Table 1. Percentages are percentages in weight and refer to the total respective formulation.

**Table 1: Inventive formulations and comparative formulations**

| Name | (I a) | (D) | (E) |
|---|---|---|---|
| (IF.1) | 5 | zero | 2 % (E.1) |
| C-(F.2) | zero | zero | 2 % (E.1) |
| C-(F.3) | zero | zero | 5 % (E.2) |
| C-(F.4) | 5 | 2 | zero |
| C-(F.5) | 2 | 2 | zero |
| C-(F.6) | 1 | zero | 2 % (E.1) |

### III. Performance tests

Button cells were fabricated using lithium nickel cobalt manganese oxide (LiNi_{0.33}Co_{0.33}Mn_{0.33}O₂; NCM 111) electrodes with a capacity of 2 mAh/cm² and a graphite electrode with a capacity of 2.15 mAh/cm². A glass-fiber filter separator (Whatmann GF/D) was used as separator, which was soaked with 100 µl of the respective electrolyte composition. All electrochemical measurements were carried out at 25 °C in climate chambers. For electrochemical testing the procedure displayed in Table 2 was used.

**Table 2: Charging scheme**

| Cycle | Charge-/discharge rate in C | Cut-off potential / V upper / lower | Comment |
|---|---|---|---|
| 1-2 | 0.1 | 4.2 / 3.0 | Formation |
| 3-12 | 1 + 0.5h constant voltage/current < 0.1C | 4.2 / 3.0 | Cycling test |
| 13 | 1 + 0.5h constant voltage/current < 0.1C | 4.4 / 3.0 | Overcharge 4.4 V |
| 14-18 | 1 + 0.5h constant voltage/current < 0.1C | 4.2 / 3.0 | Cycling test |

General remark: After reaction of the overcharge protection additive the cycling capacity is zero in the cycling test and the cell is irreversibly deactivated. If no overcharge protection additive is used or if it is not effective the cell still shows a high capacity.

If the overcharge additive starts to react a plateau can be seen in the voltage vs. time plot of the cycling experiment. The plateau is caused by the oxidative faradic reactions which take place due to the decomposition of the overcharge additive. The voltage value at which the reaction starts is called onset voltage. A higher onset voltage of the overcharge additive enables higher cut off voltages for the battery and consequently higher energy density can be realized.

The cycling performance is summarized in Table 3, the passivation in Table 4.

| | 2 C rate [mAh/g] | Capacity retention after 100 cycles, based on 26^{th} cycle |
|---|---|---|
| (IF.1) | 132 | 98.6 |
| C-(F.2) | 131 | 98.6 |

The cycling performance was as follows.

**Table 4:**

| | Onset potential of overcharge protection [V] | Test after overcharge |
|---|---|---|
| (IF.1) | 4.7 | passivation |
| C-(F.2) | 4.9 | No passivation |
| C-(F.3) | 4.4 | Passivation |
| C-(F.4) | 4.3 | Passivation |
| C-(F.5) | 4.3 | Passivation |
| C-(F.6) | 4.7 | No passivation |

## Claims

1. Liquid formulation comprising
(A) at least one aprotic organic solvent,
(B) at least one lithium salt,
(C) at least 1.5 % by weight of one compound according to formula (I) 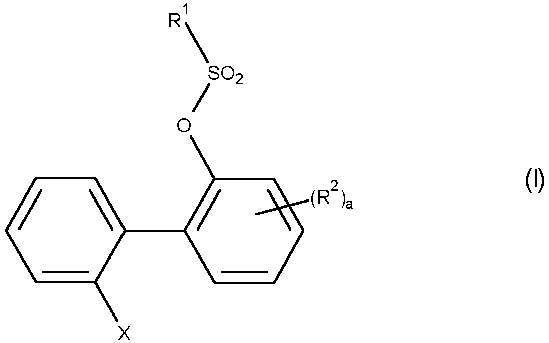 wherein:
R¹ selected from C₁-C₆-alkyl, phenyl, and 2- and 4-pyridyl, wherein said C₁-C₆-alkyl, phenyl, and 2-pyridyl and 4-pyridyl may be non-substituted or substituted with one or more moieties selected from F, CN, C₁-C₄-alkyl and CF₃,
R² identical or different and selected from C₁-C₄-alkyl, CN, and fluorine,
a being a number in the range of from zero to four,
X being selected from O-SO₂-R¹ and hydrogen,
(D) zero to 0.01 % by weight of 1,2,3,4-tetrahydronaphthalene,
(E) and, optionally, at least one additive other than (C),
percentages referring to the whole respective liquid formulation.

2. Liquid formulation according claim 1 wherein a is zero.

3. Liquid formulation according to claim 1 or 2 wherein R¹ is CH₃.

4. Liquid formulation according to any of the preceding claims wherein aprotic solvent (A) is selected from organic carbonates.

5. Liquid formulation according to any of the preceding claims wherein additive (E) is selected from organic phosphates, organic phosphonates, organic sultones, and LiBOB.

6. Liquid formulations according to any of the preceding claims wherein X in the compound of formula (I) is hydrogen.

7. Liquid formulation according to any of the preceding claims containing
in total 0.1 to 25 % by weight of lithium salt (B),
in total 1.5 to 10 % of compound according to formula (I),
zero to 0.01 % by weight of 1,2,3,4-tetrahydronaphthalene (D), and
zero to in total 30% of additive(s) (E),
percentages referring to the whole respective liquid formulation.

8. Use of liquid formulations according to any of the preceding claims in electrochemical cells.

9. Electrochemical cell comprising
(a) one cathode
(b) one anode,
(c) a separator, and
(d) an electrolyte selected from liquid formulations according to any of claims 1 to 7.

10. Electrochemical cell according to claim 9 wherein the cathode (a) contains at least one cathode active material selected from LiCoO₂, lithium nickel cobalt aluminum oxide, and layered lithiated nickel-cobalt-manganese oxide.

## Patentansprüche

1. Flüssigformulierung, aufweisend:
(A) zumindest ein aprotisches organisches Lösungsmittel,
(B) zumindest ein Lithiumsalz,
(C) zumindest 1,5 Gewichts-% von einer Verbindung nach Formel (I) 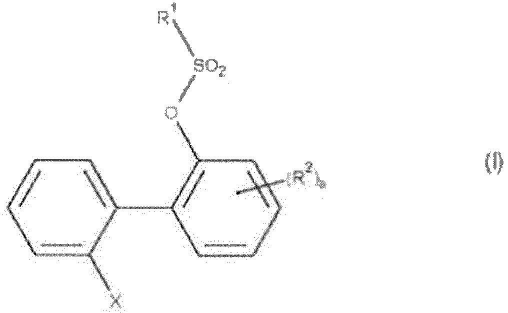 wobei:
R¹ ausgewählt ist aus C₁-C₆-Alkyl, Phenyl und 2- und 4-Pyridyl, wobei das C₁-C₆-Alkyl, Phenyl und 2-Pyridyl und 4-Pyridyl unsubstituiert sein können oder mit einem oder mehreren Anteilen substituiert sein können, die ausgewählt sind aus F, CN, C₁-C₄-Alkyl und CF₃,
R² identisch oder unterschiedlich ist und ausgewählt ist aus C₁-C₄-Alkyl, CN und Fluor,
a eine Zahl in dem Bereich von null bis vier ist,
X ausgewählt ist aus O-SO₂-R¹ und Wasserstoff,
(D) null bis 0,01 Gewichts-% von 1,2,3,4-Tetrahydronaphthalen,
(E) und, optional, zumindest ein anderes Additiv als (C),
wobei die Prozentsätze sich auf die gesamte jeweilige Flüssigformulierung beziehen.

2. Flüssigformulierung nach Anspruch 1, wobei a null ist.

3. Flüssigformulierung nach Anspruch 1 oder 2, wobei R¹ CH₃ ist.

4. Flüssigformulierung nach einem der vorherigen Ansprüche, wobei das aprotische Lösungsmittel (A) ausgewählt ist aus organischen Carbonaten.

5. Flüssigformulierung nach einem der vorherigen Ansprüche, wobei das Additiv (E) ausgewählt ist aus organischen Phosphaten, organischen Phosphonaten, organischen Sultonen und LiBOB.

6. Flüssigformulierung nach einem der vorherigen Ansprüche, wobei X in der Verbindung der Formel (I) Wasserstoff ist.

7. Flüssigformulierung nach einem der vorherigen Ansprüche, die folgendes enthält:
insgesamt 0,1 bis 25 Gewichts-% von dem Lithiumsalz (B),
insgesamt 1,5 bis 10 Gewichtsprozent einer Verbindung nach der Formel (I),
null bis 0,01 Gewicht-% von 1,2,3,4-Tetrahydronaphthalen (D), und
null bis insgesamt 30 % von einem Additiv oder Additiven (E)
wobei die Prozentsätze sich auf die gesamte jeweilige Flüssigformulierung beziehen.

8. Verwendung von Flüssigformulierungen nach einem der vorherigen Ansprüche in elektrochemischen Zellen.

9. Elektrochemische Zelle, aufweisend:
(a) eine Kathode,
(b) eine Anode,
(c) einen Separator, und
(d) ein aus den Flüssigformulierungen nach einem der Ansprüche 1 bis 7 ausgewählter Elektrolyt.

10. Elektrochemische Zelle nach Anspruch 9, wobei die Kathode (a) zumindest ein aktives Kathodenmaterial, ausgewählt aus LiCoO₂, Lithium-Nickel-Cobalt-Aluminiumoxid und einem geschichteten lithiierten Nickel-Cobalt-Manganoxid, enthält.

## Revendications

1. Formulation liquide comprenant
(A) au moins un solvant organique aprotique,
(B) au moins un sel de lithium,
(C) au moins 1,5 % en poids d'un composé selon la formule (I) 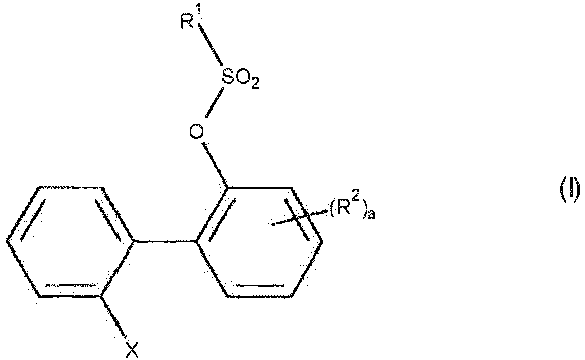 où :
R1 est choisi parmi un alkyle en C₁-C₆, un phényle et un 2-pyridile et 4-pyridyle, lesdits alkyle en C₁-C₆, phényle et 2-pyridyle et 4-pyridyle pouvant être non substitués ou substitués avec un ou plusieurs fragments choisis parmi F, CN, alkyle en C₁-C₄ et CF₃,
R² est identique ou différent et choisi parmi un alkyle en C₁-C₄, CN et du fluor,
A est un nombre allant de zéro à quatre,
X étant choisi parmi O-SO₂-R¹ et de l'hydrogène,
(D) est zéro à 0,01 % en poids de 1,2,3,4-tétrahydronaphtalène,
(E) est, de manière facultative, au moins un additif autre que (C),
les pourcentages se rapportant à la formulation liquide respective entière.

2. Formulation liquide selon la revendication 1, dans laquelle a est égal à zéro.

3. Formulation liquide selon la revendication 1 ou 2, dans laquelle R¹ est CH₃.

4. Formulation liquide selon l'une quelconque des revendications précédentes, dans laquelle le solvant aprotique (A) est choisi parmi des carbonates organiques.

5. Formulation liquide selon l'une quelconque des revendications précédentes, dans laquelle l'additif (E) est choisi parmi des phosphates organiques, des phosphonates organiques, des sultones organiques, et LiBOB.

6. Formulation liquide selon l'une quelconque des revendications précédentes, dans laquelle X dans le composé ayant la formule (I) est de l'hydrogène.

7. Formulation liquide selon l'une quelconque des revendications précédentes, contenant
au total 0,1 à 25 % en poids de sel de lithium (B),
au total 1,5 à 10 % de composé selon la formule (I),
zéro à 0,01 % en poids de 1,2,3,4-tétrahydronaphtalène (D), et
zéro à un total de 30 % d'additif(s) (E),
les pourcentages se rapportant à la formulation liquide respective.

8. Utilisation de formulations liquides selon l'une quelconque des revendications précédentes dans des cellules électrochimiques.

9. Cellule électrochimique comprenant
(a) une cathode
(b) une anode,
(c) un séparateur, et
(d) un électrolyte choisi parmi des formulations liquides selon l'une quelconque des revendications 1 à 7.

10. Cellule électrochimique selon la revendication 9, dans laquelle la cathode (a) contient au moins un matériau actif de cathode choisi parmi LiCoO₂, de l'oxyde de nickel-cobalt-aluminium au lithium, et de l'oxyde de nickel-cobalt-manganèse lithié en couches.
